# EUROPEAN PATENT SPECIFICATION

(11) **EP 2 204 869 B1**
(45) Date of publication and mention of the grant of the patent: **23.05.2012**
(21) Application number: 10003463.6
(22) Date of filing: 11.12.2002
(51) Int. Cl.: H01M 6/16, H01M 2/26, H01M 4/66

(54) **Electrolyte additive for non-aqueous electrochemical cells**
Elektrolytzusatz für nichtwässrige elektrochemische Zellen
Additif d'électrolyte pour cellules électrochimiques non aqueuses

(30) Priority: 14.12.2001 US 22289
(43) Date of publication of application: 07.07.2010
(62) Divisional of application: 02795827.1
(73) Proprietor: The Gillette Company, Boston, MA 02127 (US)
(72) Inventor: Blasi, Jane, A., South Danbury CT 06810 (US); Issaev, Nikolai, N., Woodbridge CT 06525 (US); Pozin, Michael, Brookfield CT 06804 (US)
(74) Representative: Mather, Peter Geoffrey

(56) References cited:
- EP-A- 0 441 589
- EP-A2- 1 128 450
- JP-A- 1 311 569
- JP-A- 2 056 849
- US-A- 4 971 868
- US-A- 5 650 244
- US-A- 5 834 133
- PATENT ABSTRACTS OF JAPAN vol. 013, no. 46 (E-711), 2 February 1989 (1989-02-02) & JP 63 241867 A (SANYO ELECTRIC CO LTD), 7 October 1988 (1988-10-07)

## Description

This invention relates to non-aqueous electrochemical cells for batteries.

Batteries are commonly used electrical energy sources. A battery contains a negative electrode, typically called the anode, and a positive electrode, typically called the cathode. The anode contains an active material that can be oxidized; the cathode contains or consumes an active material that can be reduced. The anode active material is capable of reducing the cathode active material.

When a battery is used as an electrical energy source in a device, electrical contact is made to the anode and the cathode, allowing electrons to flow through the device and permitting the respective oxidation and reduction reactions to occur to provide electrical power. An electrolyte in contact with the anode and the cathode contains ions that flow through the separator between the electrodes to maintain charge balance throughout the battery during discharge.

Aluminum can be used as a construction material in a battery. However, aluminum can corrode because the electrode potential of aluminum is lower than the normal operating potential of the positive electrode of the battery. This corrosion increases the internal impedance of a cell, leading to capacity loss and to a decrease in specific energy. When aluminum is coupled with metals of a different nature in the environment of an electrochemical cell, the aluminum can also be susceptible to corrosion degradation.

US 5,650,244 describes a non aqueous electrolyte battery which comprises an electrolyte which includes at least one calcium salt.

### SUMMARY

The invention relates to an electrochemical cell that includes parts made from aluminum or an aluminum-based alloy; these parts contact the electrolyte of the cell. The cell also includes an additive to suppress aluminum corrosion.

Accordingly the present invention provides claim 1.

Because aluminum weighs less than other metals, such as stainless steel that are used in electrochemical cells, the cell is relatively light. The cell also has low ohmic resistance under polarization, because aluminum is very conductive. Furthermore, aluminum is less expensive than stainless steel. The aluminum is protected from corrosion by the addition of a perchlorate salt.

The electrolyte can contain about 500 to about 2500 ppm by weight of a perchlorate salt. The perchlorate salt can be, e.g., LiClCO₄, Ca(ClO₄)₂, Al(ClO₄)₃, or Ba(ClO₄)₂. In some embodiments, the electrolyte is essentially free of LiPF₆.

Primary electrochemical cells are meant to be discharged to exhaustion only once, and then discarded. Primary cells are not meant to be recharged. The cathode can contain MnO₂ and the anode can contain lithium. The electrolyte can contain at least 500 ppm by weight of the perchlorate salt, or at least 1000, 1500, or 2500 ppm by weight of the perchlorate salt. The electrolyte contains less than 20,000 ppm by weight of the perchlorate salt. The perchlorate salt can be, e.g., LiClO₄, Ca(ClO₄)₂, Al(ClO₄)₃, or Ba(ClO₄)₂. The electrolyte can also include LiPF₆, e.g., at least 5000 ppm by weight LiPF₆ or at least 10,000 ppm by weight LiPF₆. In other aspects, the electrolyte is essentially free of LiPF₆. The case of the cell can be aluminum, either in whole or in part.

In another aspect, the invention features an electrochemical cell comprising a cathode containing MnO₂, an anode containing lithium, and an electrolyte containing about 500 ppm to about 2000 ppm of a perchlorate salt. The perchlorate salt can be, e.g., LiClO₄, Ca(ClO₄)₂, Al(ClO₄)₃, or Ba(ClO₄)₂.

In another aspect, the invention features an electrochemical cell comprising a cathode containing MnO₂, an anode containing lithium, and an electrolyte containing a perchlorate salt; the cell is a primary electrochemical cell and includes two pieces of aluminum alloy in electrical contact with each other.

In yet another aspect, the invention features a method of inhibiting aluminum corrosion in a primary electrochemical cell. The method includes: (a) adding a perchlorate salt to the electrolyte of the cell; and (b) placing the electrolyte, an anode containing Li, and a cathode containing MnO₂ and an aluminum alloy current collector into a cell case. The perchlorate salt can be, e.g., LiClO₄, Ca(ClO₄)₂, Al(ClO₄)₃, or Ba(ClO₄)₂.

The details of one or more embodiments of the invention are set forth in the accompanying drawings and the description below. Other features, objects, and advantages of the invention will be apparent from the description and drawings, and from the claims.

### DESCRIPTION OF DRAWINGS

Fig. 1 is a sectional view of a nonaqueous electrochemical cell.
Fig. 2 is a graph showing current density vs. potential of the aluminum in an electrode exposed to LiTFS, DME:EC:PC electrolytes containing different amounts of LiClO₄.
Fig. 3 is a graph showing current density vs. time of the aluminum in an electrode exposed to LiTFS, DME:EC:PC electrolytes containing different amounts of LiClO₄.
Fig. 4 is a graph showing current density vs. time of the aluminum in an electrode exposed to a LiTFS, DME:EC:PC electrolyte containing LiClO₄.
Fig. 5 is a graph showing current density vs. potential of the aluminum in an electrode exposed to LiTFS + LiTFSI, DME:EC:PC electrolytes containing different amounts of LiClO₄.
Fig. 6 is a graph showing current density vs. time of the aluminum in an electrode exposed to LiTFS + LiTFSI, DME:EC:PC electrolytes containing different amounts of LiClO₄.
Fig. 7 is a graph showing current density vs. potential of the aluminum in an electrode exposed to LiTFS + LiPF₆, DME:EC:PC electrolytes containing different amounts of LiClO₄.
Fig. 8 is a graph showing current density vs. time of the aluminum in an electrode exposed to LiTFS + LiPF₆, DME:EC:PC electrolytes containing different amounts of LiClO₄.
Fig. 9 is a graph showing current density vs. potential of the aluminum in an electrode exposed to a LiTFS, DME:EC:PC electrolyte containing different amounts of LiClO₄ and different amounts of Al(ClO₄)₃.
Fig. 10 is a graph showing current density vs. potential of the aluminum in an electrode exposed to a LiTFS, DME:EC:PC electrolyte containing different amounts of LiClO₄ and different amounts of Ba(ClO₄)₂.

### DETAILED DESCRIPTION

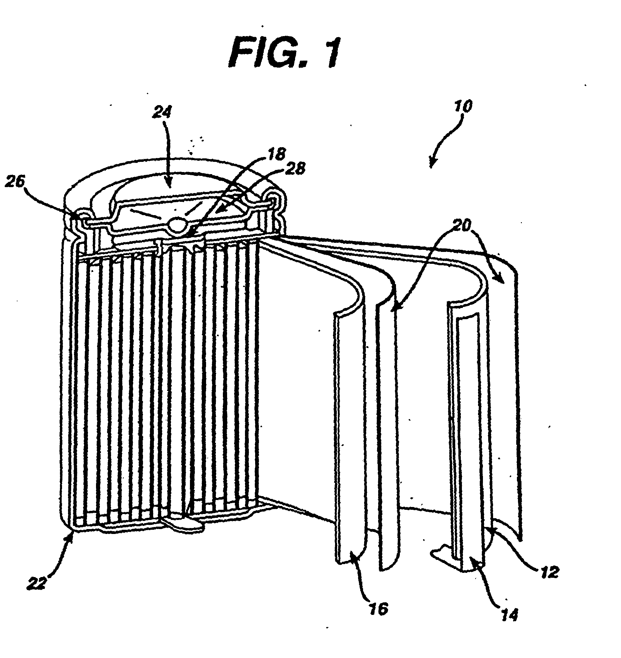

Referring to Fig. 1, an electrochemical cell 10 includes an anode 12 in electrical contact with a negative lead 14, a cathode 16 in electrical contact with a positive lead 18, a separator 20 and an electrolytic solution. Anode 12, cathode 16, separator 20 and the electrolytic solution are contained within a case 22. The electrolytic solution includes a solvent system and a salt that is at least partially dissolved in the solvent system.

Cathode 16 includes an active cathode material, which is generally coated on the cathode current collector. The current collector is an aluminum alloy, e.g., aluminum foil. The active material can be, MnO₂, and/or FeS₂. The active material can be mixed with a conductive material such as carbon and a binder such as polytetrafluoroethylene (PTFE). An example of a cathode is one that includes aluminum foil coated with MnO₂. The cathode can be prepared as described in U.S. Patent No. 4,279,972.

Anode 12 can consist of an active anode material, usually in the form of an alkali metal, e.g., Li, Na, K, or an alkaline earth metal, e.g., Ca, Mg. The anode can also consist of alloys of alkali metals and alkaline earth metals or alloys of alkali metals and Al. The anode can be used with or without a substrate. The anode also can consist of an active anode material and a binder. In this case an active anode material can include carbon, graphite, an acetylenic mesophase carbon, coke, a metal oxide and/or a lithiated metal oxide. The binder can be, for example, PTFE. The active anode material and binder can be mixed to form a paste, which can be applied to the substrate of anode 12.

Separator 20 can be formed of any of the standard separator materials used in nonaqueous electrochemical cells. For example, separator 20 can be formed of polypropylene, (e.g., nonwoven polypropylene or microporous polypropylene), polyethylene, and/or a polysulfone.

The electrolyte can be in liquid, solid or gel (polymer) form. The electrolyte can contain an organic solvent such as propylene carbonate (PC), ethylene carbonate (EC), dimethoxyethane (DME), dioxolane (DO), tetrahydrofuran (THF), acetonitrile (CH₃CN), gamma-butyrolactone, diethyl carbonate (DEC), dimethyl carbonate (DMC), ethyl methyl carbonate (EMC) dimethylsulfoxide (DMSO) methyl acetate (MA), methyl formiate (MF), sulfolane or combinations thereof. The electrolyte can alternatively contain an inorganic solvent such as SO₂ or SOCl₂. The electrolyte may also contains a lithium salt such as lithium trifluoromethanesulfonate (LiTFS) or lithium trifluoromethanesulfonimide (LiTFSI), or a combination thereof. Additional lithium salts that can be included are listed in U.S. Patent No. 5,595,841. In some embodiments, the electrolyte may contain LiPF₆; in other embodiments, the electrolyte is essentially free of LiPF₆. The electrolyte also contains a perchlorate salt, which inhibits corrosion in the cell. Examples of suitable salts include lithium, barium, calcium, aluminum, sodium, potassium, magnesium, copper, zinc, ammonium, and tetrabutylammonium perchlorates. Generally, at least 500 ppm by weight of the perchlorate salt is used; this ensures that there is enough salt to suppress corrosion. In addition, less than about 20,000 by weight of the perchlorate salt is generally used. If too much perchlorate salt is used, the cell can be internally shorted under certain conditions during use.

To assemble the cell, separator 20 can be cut into pieces of a similar size as anode 12 and cathode 16 and placed therebetween as shown in Fig. 1. Anode 12, cathode 16, and separator 20 are then placed within case 22, which can be made of a metal such as nickel, nickel plated steel, stainless steel, or aluminum, or a plastic such as polyvinyl chloride, polypropylene, polysulfone, ABS or a polyamide. Case 22 is then filled with the electrolytic solution and sealed. One end of case 22 is closed with a cap 24 and an annular insulating gasket 26 that can provide a gas-tight and fluid-tight seal. Positive lead 18, made of aluminum alloy connects cathode 16 to cap 24. Cap 24 may also be made of aluminum. A safety valve 28 is disposed in the inner side of cap 24 and is configured to decrease the pressure within battery 10 when the pressure exceeds some predetermined value. Additional methods for assembling the cell are described in U.S. Patent Nos. 4,279,972; 4,401,735; and 4,526,846.

Other configurations of battery 10 can also be used, including, e.g., the coin cell configuration. The batteries can be of different voltages, e.g., 1.5V, 3.0V, or 4.0V.

The invention is further described in the following examples, which do not limit the scope of the invention described in the claims.

### Example 1 not forming part of the invention

### A1 corrosion in different electrolytes with addition of LiClO₄ Glass Cell Experimentation

An electrochemical glass cell was constructed having an Al working electrode, a Li reference electrode, and two Li auxiliary electrodes. The working electrode was fabricated from a 99.999 % Al rod inserted into a Teflon sleeve to provide a planar electrode area of 0.33 cm². The native oxide layer was removed by first polishing the planar working surface with 3 µm aluminum oxide paper under an argon atmosphere, followed by thorough rinsing of the Al electrode in electrolyte. All experiments were performed under an Ar atmosphere.

### Cyclic Voltammetry

Corrosion current measurements were made according to a modified procedure generally described in X. Wang et al., Electrochemica Acta, vol. 45, pp. 2677-2684 (2000). The corrosion potential of Al was determined by continuous cyclic voltammetry. In each cycle, the potential was initially set to an open circuit potential, then anodically scanned to +4.5 V and reversed to an open circuit potential. A scan rate of 50 mV/s was selected, at which good reproducibility of the corrosion potential of aluminum was obtained. The corrosion potential of aluminum was defined as the potential at which the anodic current density reached 10⁻⁵ A/cm² at the first cycle.

### Chronoamperometry

Corrosion current measurements were made according to the procedure described in EP 0 852 072. The aluminum electrode was polarized at various potentials vs. a Li reference electrode while the current was recorded vs. time. Current vs. time measurements were taken during a 30-minute period. The area under current vs. time curve was used as a measure of the amount of aluminum corrosion occurring. The experiment also could be terminated in case the current density reached 3mA/cm² before the 30 minute time period elapsed and no corrosion suppression occurred. Corrosion suppression occurred when the resulting current density was observed in the range of 10⁻⁶ A/cm².

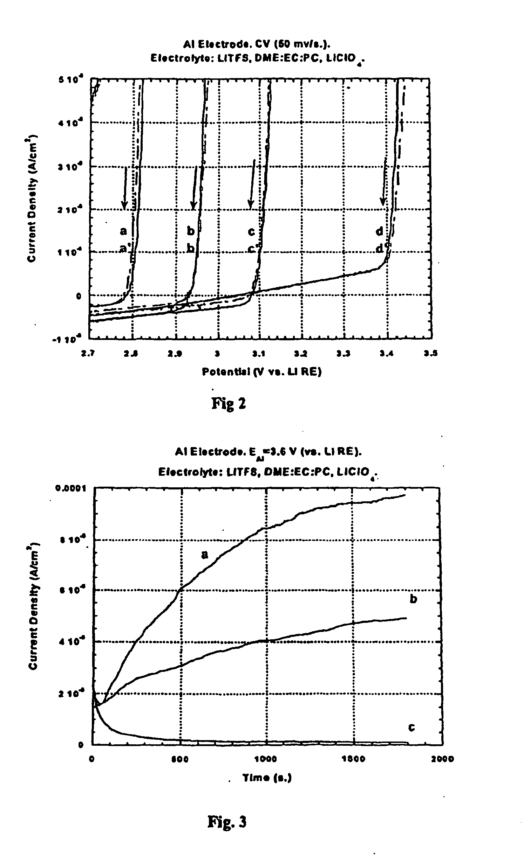

Referring to Fig. 2, cyclic voltammograms taken in the electrolyte containing LiTFS and DME:EC:PC showed significant shifts in the corrosion potential of the A1 electrode. The addition of LiClO₄ to the electrolyte shifted the potential of aluminum in the positive direction, which indicates corrosion suppression.

Curves "a" and "a"' in Fig. 2 show the corrosion potential of the aluminum in the electrolyte containing no LiClO₄. The addition of 500 ppm of LiClO₄ to the electrolyte shifted the potential of the aluminum 150 mV in the positive direction (curves "b" and "b"'); the addition of 1000 ppm of LiClO₄ to the electrolyte shifted the potential 300 mV (curves "c" and "c"'); and the addition of 2500 ppm of LiClO₄ to the electrolyte shifted the potential 600 mV (curves "d" and "d"'). These results demonstrate that the addition of increasing amounts of LiClO₄ to the electrolyte containing LiTFS salt and mixture of DME:EC:PC results in increasing degrees of corrosion protection of the aluminum electrode.

Referring to Fig. 3, curve "a" shows a potentiostatic dependence (chronoamperogram) of the aluminum electrode exposed to the electrolyte containing LiTFS, DME:EC:PC with the addition of 500 ppm LiClO₄; curve "b" shows the chronoamperogram taken in the same electrolyte with addition of 1000 ppm LiClO₄; curve "c" shows the chronoamperogram taken in the electrolyte containing LiTFS, DME:EC:PC, and 2500 ppm LiClO₄. As shown in Fig. 3, at a LiClO₄ concentration of 2500 ppm, the aluminum corrosion at +3.6 V (vs. a Li reference electrode) is effectively suppressed, and the corrosion current is less than 10⁻⁶ A/cm² after 30 minutes of measurement.

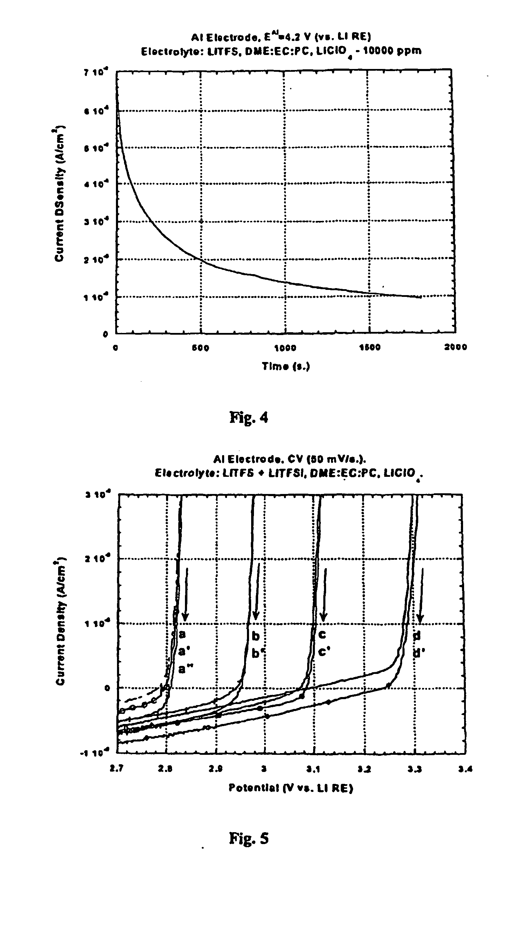

Referring to Fig. 4, the electrochemical window of A1 stability can be extended as high as +4.2 V (vs. a Li reference electrode) by increasing the concentration of LiClO₄ to 1% (10,000 ppm). At a LiClO₄ concentration of 1%, aluminum corrosion is effectively suppressed at 4.2 V. The corrosion current after 30 minutes is 8-10 µA/cm², and the current continues to fall over time. The falling current indicates passivation of the A1 surface. The increased level of the resulting current (10 µA/cm² vs. 1 µA/cm² after 30 minutes of experiment) is due to the increased background current at these potentials.

Referring to Fig. 5, curves "a", "a"', and "a""show the corrosion potential of an aluminum electrode subjected to an electrolyte containing a mixture of LiTFS and LiTFSI salts, DME:EC:PC, and no LiClO₄. The addition of 500 ppm of LiClO₄ to this electrolyte shifted the corrosion potential of the aluminum 150 mV in the positive direction (curves "b" and "b"'); the addition of 1000 ppm of LiClO₄ to the electrolyte shifted the potential 280 mV (curves "c" and "c"'); and the addition of 2500 ppm of LiClO₄ to the electrolyte shifted potential 460 mV (curves "d" and "d'"). These results demonstrate that the addition of increasing amounts of LiClO₄ to the electrolyte containing the mixture of LiTFS and LiTFSI salts and DME:EC:PC results in increasing degrees of corrosion protection of the aluminum electrode.

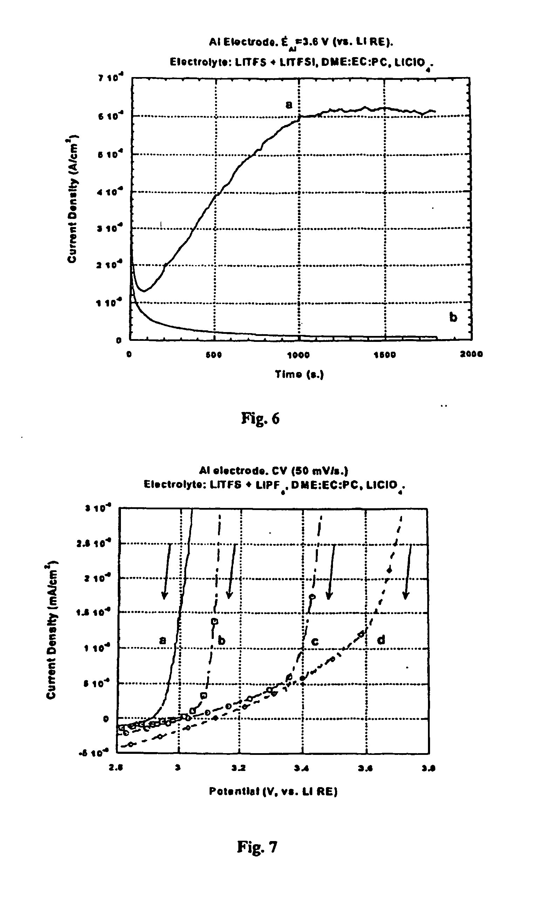

Referring to Fig. 6, curve "a" shows the chronoamperogram of the aluminum electrode exposed to the electrolyte containing a mixture of LiTFS and LiTFSI salts, DME:EC:PC, and 1000 ppm LiClO₄; and curve "b" shows the chronoamperogram of the aluminum electrode exposed to the same electrolyte containing 2500 ppm LiClO₄. As shown in Fig. 5, at a LiClO₄ concentration of 2500 ppm in LiTFS, LiTFSI, DME:EC:PC electrolyte, the aluminum corrosion at +3.6 V is effectively suppressed, and resulting corrosion current of the A1 electrode is about 10⁻⁶ A/cm² after 30 minutes.

Referring to Fig. 7, curve "a" shows the corrosion potential of the aluminum subjected to an electrolyte containing a mixture of LiTFS and LiPF₆ salts, DME:EC:PC, and no LiClO₄. The addition of 500 ppm of LiClO₄ to this electrolyte shifted the corrosion potential of the aluminum 125 mV in the positive direction (curve "b"); the addition of 2500 ppm of LiClO₄ to the electrolyte shifted the potential 425 mV (curve "c"); and the addition of 5000 ppm of LiClO₄ to the electrolyte shifted the potential 635 mV (curve "d"). These results demonstrate that the addition of increasing amounts of LiClO₄ to the electrolyte containing the mixture of LiTFS, LiPF₆ salts, and DME:EC:PC results in increasing degrees of corrosion protection of the aluminum electrode.

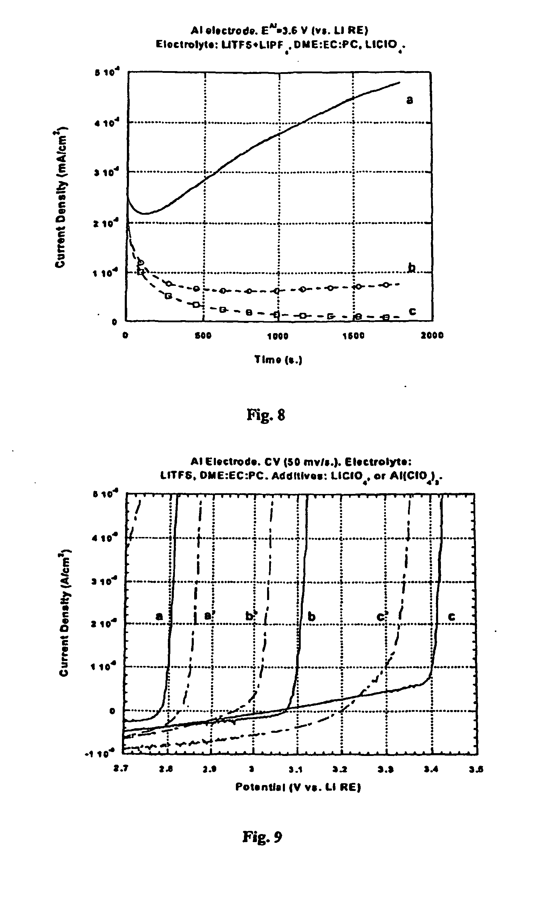

Referring to Fig. 8, curve "a" shows a chronoamperogram of the aluminum electrode exposed to the electrolyte containing LiTFS, LiPF₆, DME:EC:PC with no LiClO₄; curve "b" shows a chronoamperogram taken in the same electrolyte with 2500 ppm LiClO₄ added; curve "c" shows a chronoamperogram taken in the electrolyte containing LiTFS, LiPF₆, DME:EC:PC, and 5000 ppm LiClO₄. As shown in Fig. 8, at a LiClO₄ concentration of 5000 ppm, the aluminum corrosion at +3.6 V (vs. a Li reference electrode) is effectively suppressed, and the corrosion current is less than 10⁻⁶ A/cm² after 30 minutes of measurement.

### Example2 not forming part of the invention

### A1 corrosion in electrolytes containing LITFS, DME:EC:PC, with the addition of different perchlorates

Electrochemical glass cells were constructed as described in Example 1. Cyclic voltammetry and chromoamperometry were performed as described in Example 1.

Referring to Fig. 9, curves "a", "b", and "c" show the corrosion potential of an aluminum electrode exposed to the electrolyte LiTFS, DME:EC:PC containing 0, 1000 and 2500 ppm of LiClO₄, respectively. Curves "a"', "b'," and "c"'show the corrosion potential of an aluminum electrode exposed to the electrolyte LiTFS, DME:EC:PC containing 0, 1000 and 2500 ppm of Al(ClO₄)₃, respectively. These results demonstrate that the addition of Al(ClO₄)₃ salt, like the addition of LiClO₄ salt, suppressed the corrosion of Al.

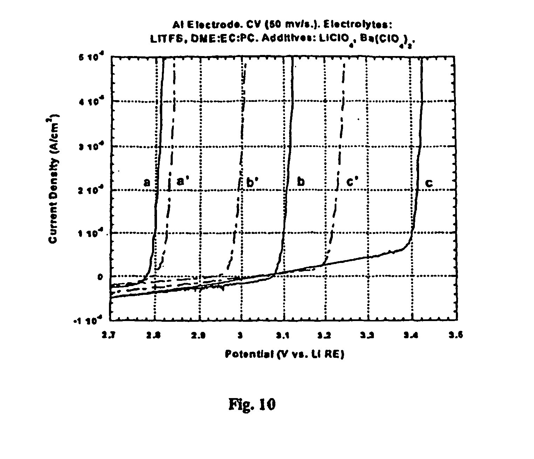

Referring to Fig. 10, curves "a", "b", and "c" show the corrosion potential of an aluminum electrode exposed to the electrolyte LiTFS, DME:EC:PC containing 0, 1000 and 2500 ppm of LiClO₄, respectively. Curves "a"', "b"' and "c"'show the corrosion potential of an aluminum electrode exposed to the electrolyte LiTFS, DME:EC:PC containing 0,1000 and 2500 ppm of Ba(ClO₄)₂, respectively. These results demonstrate that the addition of Ba(ClO₄)₂ salt, like the addition of LiClO₄ salt, suppressed the corrosion of A1.

The shifts in the corrosion potential that result from the addition of LiClO₄, Al(ClO₄)₃, and Ba(ClO₄)₂ to an electrolyte containing LiTFS and DME:EC:PC are summarized below in Table 1.

**Table 1**

| Additive | Anodic shift of corrosion potential (mV) | | |
|---|---|---|---|
| | 0 ppm | 1000 ppm | 2500 ppm |
| Al(ClO₄)₃ | 0 | 170 | 450 |
| Ba(ClO₄)₂ | 0 | 170 | 400 |
| LiClO₄ | 0 | 300 | 600 |

### Example 3 not forming part of the invention

### Al corrosion in electrolyte containing LiTFS, DME:EC:PC, (vial storage test)

The following test conditions were used:
- Electrodes: EMD (electrochemically synthesized manganese dioxide) based cathodes applied on the Al current collector
- Electrolyte (10 mL per sample): LiTFS, DME:EC:PC with and without addition of LiClO₄ salt
- Aging conditions: 60°C for 20 days

Direct determination of Al corrosion was performed in one of two ways:
- Analytical determination of Al ions in the electrolyte after aging (ICP method)
- Direct observation of the Al surface (optical microscopy) after aging

Measurements of Al corrosion were performed by measuring the Al ions in the electrolyte after aging of the EMD based cathodes with an Al current collector. Analytical results (ICP) are summarized in Table 2.

**Table 2**

| Sample | Electrolyte | Al concentration after storage (ppm) |
|---|---|---|
| None | LiTFS, DME:EC:PC | 1.94 ± 0.20 |
| EMD based cathode on Al current collector | LiTFS, DME:EC:PC | 21.55 ± 1.58 |
| EMD based cathode on Al current collector | LiTFS, DME:EC:PC + 2500 ppm LiClO₄ | 2.16 ± 0.18 |

The level of At ions in the electrolyte indicates the rate of Al corrosion. As shown above, the background level of Al ions in solution is about 2 ppm. As referred to herein, the corrosion of a metal is said to be suppressed when, after the test described above is performed, the concentration of metal ions in the electrolyte is less than about 3 ppm, which is just above the background level.

The Al concentration in the electrolyte without LiClO₄ addition is high (the range is 19.4-23 ppm). Thus, part of the Al substrate has dissolved (corroded) under the potential of the applied active cathode material.

On the other hand, the samples which were stored in the electrolytes with added LiClO₄ did not show any corrosion (the resulting Al concentration in the electrolyte is at the background level 1.9-2.3 ppm). These data confirm results of the electrochemical measurements in a glass cell: 2500 ppm of LiClO₄ completely suppresses the corrosion of Al at the potential of the EMD cathode.

The analytical data were confirmed by the direct observation of Al surface after aging (under an optical microscope, at a magnification of 60X). The electrodes stored in the electrolyte without LiClO₄ exhibited substantial corrosion, as viewed under the optical microscope. The section stored in the electrolyte with added LiClO₄ showed virtually no corrosion.

### Example 4 not forming part of the invention

### Al current collector coupled with other metals, (vial storage test)

The same cathodes on the Al substrate as described above were used in this experiment. In this case, the Al substrates were welded to stainless steel (SS) or nickel (Ni) tabs. A description of the samples and analytical results is presented in Table 3.

**Table 3**

| Sample | Electrolyte | Ni (ppm) | Al (ppm) | Fe (ppm) |
|---|---|---|---|---|
| None | LiTFS, DME:EC:PC | < 1.0 | <1.0 | <1.0 |
| Cathode (Al cur. Collector with welded SS tab) | LiTFS, DME:EC:PC | <1.0 | 24.4 | 5.3 |
| Cathode (Al cur. collector with welded Ni tab) | LiTFS, DME:EC:PC | 90.9 | 20.5 | <1.0 |
| Cathode (Al cur. collector with welded SS tab) | LiTFS, DME:EC:PC + 2500 ppm LiClO₄ | < 1.0 | <1.0 | <1.0 |
| Cathode (Al cur. collector with welded Ni tab) | LiTFS, DME:EC:PC + 2500 ppm LiClO₄ | < 1.0 | < 1.0 | < 1.0 |

The highest corrosion rate was observed on the sample welded to the SS tab and stored in the electrolyte without added LiClO₄ (the resulting solution contains the residue colored as a rust, and the SS tab is separated from the Al substrate). The presence of iron (5.3 ppm of Fe ions in the resulting electrolyte) indicates a high rate of SS corrosion as well as Al corrosion (24.4 ppm of the Al in the resulting electrolyte).

A high concentration of Ni (90.9 ppm) in the resulting electrolyte (Al current collector with welded Ni tab, electrolyte without LiClO₄) indicates the severe corrosion of the Ni tab coupled with Al (the Al corroded as well, as indicated by the presence of 20.5 ppm Al).

On the other hand, the samples stored in the electrolytes with added LiClO₄ did not show any corrosion (the resulting Al, Ni, Fe concentrations in the electrolyte were at the background level of <1 ppm).

### Example 5 not forming part of the invention

### Al corrosion in electrolyte containing LiTFS, DME:EC:PC and 2500 ppm of LiClO₄, (2/3A cell tests)

Cells were assembled with investigated parts and electrolytes according to the standard procedure with Al current foil applied as the cathode substrate.

The assembled cells (2/3A size) were stored 20 days at 60°C. Electrolyte removed from the cells after storage was submitted for ICP analysis. The electrolyte did not show any traces of Al, Fe, or Ni (the concentrations were at the background level).

### Example 6

### Corrosion tests using different aluminum alloys, (vial storage test)

Two cathodes were prepared by coating aluminum foil substrates (1145 Al) with MnO₂. Pieces of aluminum foil (3003 Al) were welded to the aluminum foil of each of the cathodes. One cathode was stored for 20 days at 60°C over LiTFS, DME:EC:PC electrolyte containing 2500 ppm of LiClO₄. The second cathode was stored for 20 days at 60°C over LiTFS, DME:EC:PC electrolyte containing no LiClO₄. After the 20-day period, the electrolytes were analyzed by ICP. The first electrolyte (2500 ppm LiClO₄ in the electrolyte) contained less than I ppm Al, while the second electrolyte (no LiClO₄ in the electrolyte) contained 18 ppm Al. These results indicate that the presence of LiClO₄ can suppress corrosion when two different alloys of aluminum are in electrical contact in the presence of electrolyte.

### Features of the parent application include:

1. An electrochemical cell comprising a cathode, an anode, a current collector including aluminum, an electrolyte containing a perchlorate salt and a second salt, wherein the electrochemical cell is a secondary cell, and wherein the electrolyte is essentially free of LiPF₆.
2. The cell of feature 1, wherein the electrolyte contains at least 5000 ppm by weight of a perchlorate salt.
3. The cell of feature 2, wherein the electrolyte contains at least 10,000 ppm by weight of a perchlorate salt.
4. An electrochemical cell comprising a cathode containing MnO₂, an anode containing lithium, and an electrolyte containing a perchlorate salt, wherein the cell includes an aluminum surface in electrical contact with a second metal surface, wherein the second metal surface is different than the aluminum surface.
5. The cell of feature 4, wherein the second metal surface is a steel surface.
6. The cell of feature 4, wherein the second metal surface is a stainless steel surface.
7. The cell of feature 4, wherein the second metal surface is an aluminum or aluminum alloy surface.
8. The cell of feature 4, wherein the second metal surface is a nickel surface.
9. The cell of feature 4, wherein the cell includes a cathode current collector comprising aluminum.
10. The cell of feature 4, wherein the electrolyte contains about 500 to about 2500 ppm by weight of the perchlorate salt.
11. The cell of feature 4, wherein the perchlorate salt is LiClO₄.
12. The cell of feature 4, wherein the perchlorate salt is Ca(ClO₄)₂.
13. The cell of feature 4, wherein the perchlorate salt is Ba(ClO₄)₂.
14. The cell of feature 4, wherein the perchlorate salt is Al(ClO₄)₃.
15. The cell of feature 4, wherein the electrolyte is essentially free of LiPF₆.
16. The cell of feature 4, wherein the aluminum surface is a portion of an object having at least one dimension greater than 0.5 mm.
17. The cell of feature 4, wherein the aluminum surface is a portion of an object having at least one dimension greater than 1 mm.
18. The cell of feature 4, wherein the aluminum surface is a portion of an object having at least one dimension greater than 2 mm.
19. An electrochemical cell comprising a cathode containing an aluminum current collector, an anode, and an electrolyte containing a lithium salt and a perchlorate salt, wherein the cell is a primary electrochemical cell.
20. The cell of feature 19, wherein the cathode contains MnO₂.
21. The cell of feature 19, wherein the anode contains lithium.
22. The cell of feature 19, wherein the electrolyte contains at least 500 ppm by weight of the perchlorate salt.
23. The cell of feature 19, wherein the electrolyte contains at least 1000 ppm by weight of the perchlorate salt.
24. The cell of feature 19, wherein the electrolyte contains at least 1500 ppm by weight of the perchlorate salt.
25. The cell of feature 19, wherein the electrolyte contains at least 2500 ppm by weight of the perchlorate salt.
26. The cell of feature 19, wherein the electrolyte contains less than 20,000 ppm by weight of the perchlorate salt.
27. The cell of feature 19, wherein the perchlorate salt is LiClO₄.
28. The cell of feature 19, wherein the perchlorate salt is Ca(ClO₄)₂.
29. The cell of feature 19, wherein the perchlorate salt is Ba(ClO₄)₂.
30. The cell of feature 19, wherein the perchlorate salt is Al(ClO₄)₃.
31. The cell of feature 9, wherein the cell includes a case comprising aluminum.
32. The cell of feature 31, wherein the case consists essentially of aluminum.
33. The cell of feature 19, wherein the electrolyte further comprises LiPF₆.
34. The cell of feature 33, wherein the electrolyte contains at least 5000 ppm by weight LiPF₆.
35. The cell of feature 34, wherein the electrolyte contains at least 10,000 ppm by weight LiPF₆.
36. The cell of feature 19, wherein the electrolyte is essentially free of LiPF₆.
37. An electrochemical cell comprising a cathode containing MnO₂, an anode containing lithium, an aluminum surface, and an electrolyte containing about 500 ppm to about 2000 ppm by weight of a perchlorate salt.
38. The cell of feature 37, wherein the perchlorate salt is LiClO₄.
39. The cell of feature 37, wherein the perchlorate salt is Ca(ClO₄)₂.
40. The cell of feature 37, wherein the perchlorate salt is Ba(ClO₄)₂.
41. The cell of feature 37, wherein the perchlorate salt is Al(ClO₄)₃.
42. An electrochemical cell comprising a cathode containing MnO₂, an anode containing lithium, and an electrolyte containing a perchlorate salt, wherein the cell is a primary electrochemical cell, and wherein the cell includes two pieces of aluminum in electrical contact with each other.
43. A method of inhibiting aluminum corrosion in an electrochemical cell, the method comprising:
   (a) adding a perchlorate salt to an electrolyte; and
   (b) placing the electrolyte, an anode containing Li, and a cathode containing MnO₂ and an aluminum current collector into a cell case to form the cell, wherein the cell is a primary electrochemical cell.
44. The method of feature 43, wherein the perchlorate salt is LiClO₄.
45. The method of feature 43, wherein the perchlorate salt is Ca(ClO₄)₂.
46. The method of feature 43, wherein the perchlorate salt is Ba(ClO₄)₂.
47. The method of feature 43, wherein the perchlorate salt is Al(ClO₄)₃.

## Claims

1. A primary electrochemical cell, comprising:
a cathode comprising manganese dioxide and/or iron disulfide;
an anode;
an electrolyte comprising a perchlorate salt, wherein the electrolyte includes less than 20, 000 ppm of the perchlorate salt;
a cathode current collector comprising a first aluminum alloy;
a positive lead comprising a second aluminum alloy different from the first aluminum alloy connected to and in electrical contact with the cathode current collector; and a positive end cap comprising aluminum in contact with the positive lead.

2. The cell of claim 1, wherein the anode comprises lithium.

3. The cell of claim 2, wherein the anode comprises a lithium alloy.

4. The cell of any one of the preceding claims, wherein the cathode comprises manganese dioxide.

5. The cell of any one of the preceding claims, wherein the cathode comprises iron disulfide.

6. The cell of any one of the preceding claims, wherein the electrolyte further includes a second salt selected from the group consisting of lithium trifluoromethanesulfonate, lithium trifluoromethanesulfonimide, and LiPF₆.

7. The cell of claim 6, wherein the salts in the electrolyte consist of the perchlorate salt and lithium trifluoromethanesulfonimide.

8. The cell of claim 6, wherein the salts in th electrolyte consist of the perchlorate salt and lithium trifluoromethanesulfonimide.

9. The cell of any one of the preceding claims, wherein the electrolyte includes between 500 ppm and 20,000 ppm of the perchlorate salt.

## Patentansprüche

1. Elektrochemische Primärzelle, die Folgendes umfasst:
eine Kathode, die Mangandioxid und/oder Eisendisulfid umfasst,
eine Anode,
einen Elektrolyten, der ein Perchloratsalz umfasst, wobei der Elektrolyt weniger als 20.000 ppm Perchloratsalz enthält,
einen Kathoden-Stromabnehmer, der eine erste Aluminiumlegierung umfasst,
ein Plusleitung, die eine zweite Aluminiumlegierung umfasst, die von der ersten Aluminiumlegierung abweicht, und mit dem Kathoden-Stromabnehmer verbunden ist und damit in elektrischem Kontakt steht, und eine aluminiumhaltige positive Endkappe, die mit der Plusleitung in Kontakt steht.

2. Zelle nach Anspruch 1, wobei die Anode Lithium umfasst.

3. Zelle nach Anspruch 2, wobei die Anode eine Lithiumlegierung umfasst.

4. Zelle nach einem der vorgenannten Ansprüche, wobei die Kathode Mangandioxid umfasst.

5. Zelle nach einem der vorgenannten Ansprüche, wobei die Kathode Eisendisulfid umfasst.

6. Zelle nach einem der vorstehenden Ansprüche, wobei der Elektrolyt ferner ein zweites Salz, ausgewählt aus der Gruppe bestehend aus Lithiumtrifluormethansulfonat, Lithiumtrifluormethansulfonimid und LiPF6, enthält.

7. Zelle nach Anspruch 6, wobei die Salze im Elektrolyten aus dem Perchloratsalz und Lithiumtrifluormethansulfonimid bestehen.

8. Zelle nach Anspruch 6, wobei die Salze im Elektrolyten aus dem Perchloratsalz und Lithiumtrifluormethansulfonimid bestehen.

9. Zelle nach einem der vorstehenden Ansprüche, wobei der Elektrolyt zwischen 500 ppm und 20.000 ppm Perchloratsalz enthält.

## Revendications

1. Pile électrochimique primaire comprenant :
une cathode comprenant du dioxyde de manganèse et/ou du disulfure de fer ;
une anode ;
un électrolyte comprenant un sel perchlorate, dans lequel l'électrolyte inclut moins de 20 000 ppm du sel perchlorate ;
un collecteur de courant de cathode comprenant un premier alliage d'aluminium ;
un fil positif comprenant un deuxième alliage d'aluminium différent du premier alliage d'aluminium connecté à et en contact électrique avec le collecteur de courant de cathode ; et une coiffe d'extrémité positive comprenant de l'aluminium en contact avec le fil positif.

2. Pile selon la revendication 1, dans laquelle l'anode comprend du lithium.

3. Pile selon la revendication 2, dans laquelle l'anode comprend un alliage de lithium.

4. Pile selon l'une quelconque des revendications précédentes, dans laquelle la cathode comprend du dioxyde de manganèse.

5. Pile selon l'une quelconque des revendications précédentes, dans laquelle la cathode comprend du disulfure de fer.

6. Pile selon l'une quelconque des revendications précédentes, dans laquelle l'électrolyte inclut en outre un deuxième sel choisi dans le groupe constitué de trifluorométhanesulfonate de lithium , trifluorométhanesulfonimide de lithium, et LiPF₆.

7. Pile selon la revendication 6, dans laquelle les sels dans l'électrolyte sont constitués du sel perchlorate et du trifluorométhanesulfonimide de lithium.

8. Pile selon la revendication 6, dans laquelle les sels dans l'électrolyte sont constitués du sel perchlorate et du trifluorométhanesulfonimide de lithium.

9. Pile selon l'une quelconque des revendications précédentes, dans laquelle l'électrolyte inclut entre 500 ppm et 20 00 ppm du sel perchlorate.
